# EUROPÄISCHE PATENTSCHRIFT

(11) **EP 2 199 617 B1**
(45) Veröffentlichungstag und Bekanntmachung des Hinweises auf die Patenterteilung: **15.01.2014**
(21) Anmeldenummer: 09012897.6
(22) Anmeldetag: 13.10.2009
(51) Int. Cl.: F04D 13/06, F04D 29/58, F04D 13/02, F04D 29/043, F04D 25/06, H02K 5/128, H02K 9/19, H02K 9/22, H02K 11/00, H02K 1/18

(54) **Kreiselpumpe mit einer feststehenden Achse**
Centrifugal pump with fixed shaft
Pompe centrifuge avec arbre fixe

(30) Priorität: 19.12.2008 DE 102008064162
(43) Veröffentlichungstag der Anmeldung: 23.06.2010
(73) Patentinhaber: Bühler Motor GmbH, 90459 Nürnberg (DE)
(72) Erfinder: Werson, Michael, John, Eastleigh Hants SO53 1LU (GB); French, Colin, Richard, Winchester Hampshire SO22 4QQ (GB)

(56) Entgegenhaltungen:
- DE-A1- 19 646 617
- FR-A1- 2 278 957
- JP-A- 9 317 682

## Beschreibung

Die Erfindung betrifft eine Kreiselpumpe (1), welche durch einen elektronisch kommutierten Gleichstrommotor (56) mit Axialspalt betreibbar ist, mit einem Trockenraum (54), in dem ein bewickelter Stator (55) aufgenommen ist und einem fluidfüllbaren Pumpenraum (13) in dem ein permanentmagnetisches Pumpenlaufrad (5) drehbar aufgenommen ist, wobei das Pumpenlaufrad (5) durch eine Spaltplatte (18) vom Stator (55) getrennt ist, der mit einem Rückschlussring (27), an welchen mehrere Pole (15) anschließen, und einer Leiterplatte (17) verbunden und in wärmeleitendem Kontakt ist und einen Wärmeleitkörper (10) aus einem gut wärmeleitenden Leichtmetall umfasst, wobei der Wärmeleitkörper (10) im Wesentlichen aus einer rechtwinklig zur Motorachse ausgerichteten Scheibe (40) oder Ringscheibe mit einem einstückig daran anschließenden offenen oder geschlossenen Rohr (39) besteht und die Leiterplatte auf der dem Pumpenlaufrad (5) abgewandten Seite mit dem Wärmeleitkörper verbunden ist.

Aus der DE 196 46 617 A1 ist eine gattungsgemäße Kreiselpumpe bekannt, bei der eine Achse an zwei Pumpengehäuseteilen aufgenommen ist. Das Gehäuse besteht aus einem gut wärmeleitenden Material, z.B. Leichtmetall oder Stahl und es trägt hierbei den Stator. Da die Wärmeabfuhr nur über die Umgebungsluft erfolgen kann ist nur eine eingeschränkte Kühlwirkung erzielbar.

Es ist Aufgabe der Erfindung bei einer Kreiselpumpe der eingangs genannten Gattung für einen hervorragenden Wirkungsgrad bei einer kompakten Bauweise und einfacher Montage zu sorgen. Weiter soll die Kreiselpumpe eine hohe Lebensdauer und eine verbesserte Wärmeabfuhr gewährleisten.

Diese Aufgabe wird erfindungsgemäß durch das Kennzeichen des Anspruchs 1 gelöst. Durch den einstückigen Wärmeleitkörper (10) aus Scheibe (40) mit dem daran anschließenden Rohr (39) ist eine große Wärmeübergangsfläche gegeben. Das Rohr (39) erstreckt sich in Richtung auf das Pumpenlaufrad und somit Richtung Fördermedium, es kann auch Bauteile aufnehmen, die für Kühlungszwecke verwendet werden oder andere Bauteile um Bauraum einzusparen, wobei diese Bauteile dabei Wärme an den Wärmeleitkörper (10) abführen können. Eine besonders gute Wärmeabfuhr wird erreicht, wenn das Rohr (39) das Ende einer hohlen Achse berührungsfrei und unter Belassung eines teilweise ringspaltartigen Hohlraums aufnimmt, wobei der Ringspalt mit dem Fördermedium gefüllt ist, dabei ist die Achse (3) ist in einem Aufnahmedorn (22) befestigt, der mit dem Saugstutzen (6) einstückig ist.

Weiterbildungen der Erfindung werden in den Unteransprüchen dargestellt. Durch den unmittelbaren Kontakt mit einer Strömung des Fördermediums, die durch das Pumpenlaufrad bewirkt wird, ist eine hervorragende Kühlwirkung gegeben. Dadurch erhöht sich auch die Lebensdauer. Die Trennung des Trockenraums (54) vom Pumpenraum (13) durch den Wärmeleitkörper (10) erlaubt eine besonders einfache Abdichtung, die prozessicher montierbar ist. Die besondere Ausbildung des Wärmeleitkörpers erlaubt einen sehr kompakten Aufbau der Kreiselpumpe.

Es ist vorgesehen, dass die Leiterplatte (17) großflächig mit dem Wärmeleitkörper (10) in wärmeleitenden Kontakt ist und über Stator-Befestigungsschrauben (21) mit dem Wärmeleitkörper und einem Pumpengehäuseteil (24) verbunden ist. Durch die Befestigungsschrauben wird ein besserer thermischer Kontakt der Leiterplatte mit dem Wärmeleitkörper (10) erreicht.

Es ist auch denkbar einzelne Leiterbahnen, insbesondere Masseleiterbahnen unmittelbar mit dem Wärmeleitkörper in Kontakt zu bringen, wobei die Wärmeabfuhr besonders effektiv erfolgt. Um Kurzschlüsse zu vermeiden können in Spannungsführenden Leiterbereichen Rücksprünge im Wärmeleitkörper vorgesehen sein.

Um eine besonders einfache Montage eines Dichtmittels und eine zuverlässige Dichtwirkung zu erreichen wird vorgeschlagen für die Abdichtung zwischen dem Trockenraum (54) und dem Pumpenraum (13) eine einzige Ringschnurdichtung (19) vorzusehen. Hierbei soll die Ringschnurdichtung (19) zwischen dem Wärmeleitkörper (10) und der Spaltplatte (18) angeordnet sein.

Weiter kann der Rückschlussring (27) aus einem Stapel von Blechringen bestehen und mit dem Wärmeleitkörper (10) verschraubt sein. Durch die Verschraubung wird der thermische Übergangswiderstand herabgesetzt. Die Pole (15) werden vorzugsweise aus Pulvermetall gepresst und mit dem Wärmeleitkörper (10) verschraubt. Durch die Verwendung von Pulvermetall besteht größere Designfreiheit insbesondere können an die Pole (15) Polschuhe (32) mit vergrößertem Querschnitt angeformt werden.

Um den Luftspalt zwischen den Polflächen und dem Pumpenlaufrad so gering wie möglich zu halten ist es zweckmäßig, dass die Polschuhe (32) in Vertiefungen (45) der Spaltplatte (18) aufgenommen sind.

Der Wärmeleitkörper ist so geformt, dass es eine Scheibe (40) umfasst aus der in Richtung Pumpenraum ein zentrales Rohr (39) vorspringt. Zusätzlich weist das Rohr (39) an seinem Umfang eine Nut (29) auf in welche die Ringschnurdichtung (19) eingelegt ist. Das Rohr (39) ist innerhalb der Pole (15) und der Statorwicklung (16) angeordnet, weshalb der Durchmesser des Rohrs (39) und damit der Ringschnurdichtung relativ gering ist. Dies erleichtert die Montage der Dichtung und verringert die Länge des Dichtungsbereichs.

Nach einer Weiterbildung der Erfindung ist der Wärmeleitkörper (10) mit Abstandshülsen (38) einstückig ist, die mit Gewindebuchsen (47) eines Pumpengehäuseteils (24) übereinstimmen, wobei die Abstandshülsen (38) am äußeren Rand der Scheibe (40) angeordnet sind. Die Abstandshülsen dienen als Auflager für den Wärmeleitkörper bei der Verschraubung mit dem Pumpengehäuse. Die Leiterplatte (17) wird mit mehreren Stator-Befestigungsschrauben (21), die durch jeweils eine Abstandshülse (38) hindurch verlaufen mit jeweils einer Gewindebuchsen (47) verschraubt.

Der Wärmeleitkörper (10), der Rückschlussring (27) und die Pole (15) sind durch Rückschluss-Befestigungsschrauben (37) miteinander verbunden, wobei die Pole (15) Gewindesacklöcher aufweisen, die zu der dem Pumpenraum (13) abgewandten Seite der Pole (15) geöffnet sind.

Jeder Pol (15) trägt einen mit einer Statorwicklung (16) bewickelten Isolierstoffkörper (30), der zwischen dem Polschuh (32) und dem Rückschlussring (27) angeordnet ist.

Eine besonders gute Wärmeabfuhr wird erreicht, wenn das Rohr (39) das Ende einer hohlen Achse (3) berührungsfrei und unter Belassung eines teilweise ringspaltartigen Hohlraums (11) aufnimmt, wobei der Ringspalt mit dem Fördermedium gefüllt ist. Dabei kommt es auf eine große Wärmeübertragungsfläche zwischen dem Wärmeleitkörper (10) und dem Fördermedium an, deshalb nimmt der frei in den Hohlraum (11) ragende Abschnitt der Achse (3) vorzugsweise einen 20 - 60 %-igen Anteil an der Gesamtlänge der Achse (3) ein.

Damit das Pumpenlaufrad optimal geführt ist, trägt das Rohr (39) an seinem dem Pumpenraum (13) zugewandten Ende einen Axiallagerring (9). Durch diesen Axiallagerring hindurch erstreckt sich die Achse (3), ohne den Axiallagerring zu berühren. Dadurch bildet sich ein Ringspalt, der Teil eines Kühlmittelpfads ist.

Falls erforderlich, kann zwischen dem Axiallagerring (8) und dem Wärmeleitkörper (10) ein Lageraufnahmering (20) angeordnet sein.

Bei einer besonders vorteilhaften Weiterbildung der Kreiselpumpe ragt der Wärmeleitkörper (10) in den Pumpenraum vor. Dadurch vergrößert sich die vom Fördermedium umströmte Fläche weiter, wobei ein Teil des Fördermediums über einen geschlossenen Pfad vom Druckbereich der Pumpe über den Luftspalt zwischen dem Pumpenlaufrad (5) und einer Spaltplatte (18) des zweiten Pumpengehäuseteils (24), einem Zwischenraum zwischen dem Axiallagerring (9) und der Achse (3), dem Hohlraum (11) einem Strömungskanal (26) der Achse (3) und einem Durchgang (25) eines Aufnahmedorns (22) des Pumpenkopfs zurück in den Hauptfluidstromkreis führbar ist.

Eine zweite Ausführungsform der Erfindung ist **dadurch gekennzeichnet, dass** die Scheibe (40) im Bereich innerhalb des anschließenden Rohres (39) eine Aussparung aufweist, durch welche ein Kondensator (57), der auf der Leiterplatte (17) angeordnet und mit ihr elektrisch und mechanisch verbunden ist, in das Rohr (39) hineinragt. Dadurch kann erheblich Bauraum eingespart werden, insbesondere bei der Verwendung großer Kondensatoren.

Bei dieser Ausführungsform der Erfindung kann es sinnvoll sein dass das dem Pumpenlaufrad zugewandte Ende des Rohres (39) geschlossen und hermetisch dicht ist.

Es ist auch eine Kombination der beiden Ausführungsformen möglich, wobei ein Abschnitt des Rohres (39) als Aufnahmeraum für einen Kondensator (57) dient und ein zweiter, durch eine Trennwand vom ersten Abschnitt getrennter Abschnitt dient als flüssigkeitsdurchströmter Kühlkanal.

Ein Ausführungsbeispiel der Erfindung wird nachfolgend anhand der Zeichnung näher erläutert. Es zeigt:
- Fig. 1: eine Schnittdarstellung durch eine Kreiselpumpe,
- Fig. 2: eine Explosionsdarstellung der Kreiselpumpe,
- Fig. 3: räumliche Ansichten eines Wärmeleitkörpers,
- Fig. 4: räumliche Ansichten eines ersten Pumpengehäuseteils,
- Fig. 5: räumliche Ansichten eines zweiten Pumpengehäuseteils,
- Fig. 6: eine Schnittansicht durch das erste Pumpengehäuseteil mit einer montierten feststehenden Achse,
- Fig. 7: eine vergrößerte Teilschnittansicht der Pumpe,
- Fig. 8a: eine zweite Ausführungsform des Wärmeleitkörpers und
- Fig. 8b: eine dritte Ausführungsform des Wärmeleitkörpers.

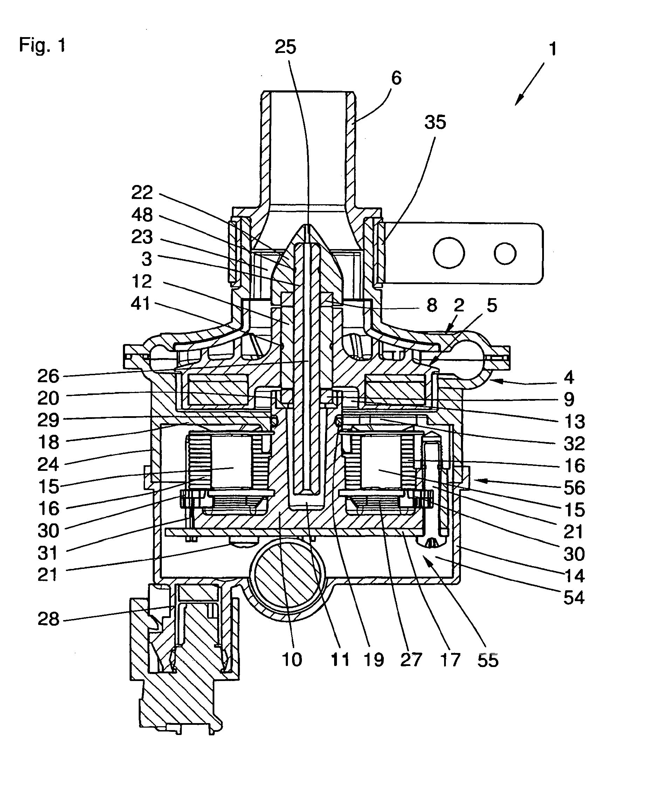

Fig. 1 zeigt eine Schnittdarstellung durch eine von einem Axialmotor 56 betriebene Kreiselpumpe 1, mit einem Pumpengehäuse 4, bestehend aus einem ersten Pumpengehäuseteil 2 (Pumpenkopf), einem zweiten Pumpengehäuseteil 24, mit einer Spaltplatte 18 und einem eine Trockenkammer 54 begrenzenden Motorgehäuse 14, einem Pumpenlaufrad 5, das auf einer Achse 3 über ein Festlager 12 drehbeweglich gelagert ist, welches Festlager 12 axial einerseits an einem ersten Axiallagerring 8 und andererseits an einem zweiten Axiallagerring 9 abstützbar ist, einem aus Aluminium bestehenden Wärmeleitkörper 10, Statorpolen 15, Statorwicklungen 16, einer Leiterplatte 17, die mit Stator-Befestigungsschrauben 21 über den Wärmeleitkörper 10 an dem zweiten Pumpengehäuseteil 24 befestigt ist. Am ersten Pumpengehäuseteil 2 (Pumpenkopf) ist ein Saugstutzen 6 angeordnet, der koaxial mit der Achse 3 ist. Die Achse 3 ist in einem Aufnahmedorn 22 befestigt, der über Speichen 23 mit dem Saugstutzen 6 einstückig ist. Das Ende des Aufnahmedorns 22 verjüngt sich, um dem anströmenden Pumpenmedium nur geringen Widerstand entgegenzubringen. Das Zentrum des Aufnahmedorns 22 bildet ein Durchgang 25 zu einem Strömungskanal 26 im Zentrum der hohlen Achse 3. Der Wärmeleitkörper besteht aus einer Scheibe 40, in dessen zentralem Bereich ein Rohr 39 und an dessen Peripherie drei Abstandshülsen 38 vorspringen. Der Verbindungsbereich des Wärmeleitkörpers 10 mit der Spaltplatte 18 ist über eine Ringschnurdichtung 19 abgedichtet, die in einer umlaufenden Nut 29 im Rohr 39 eingelegt ist. Stator-Befestigungsschrauben 21 dienen zur Befestigung einer Leiterplatte 17 und zur Befestigung des Wärmeleitkörpers 10 am zweiten Pumpengehäuseteil 24.

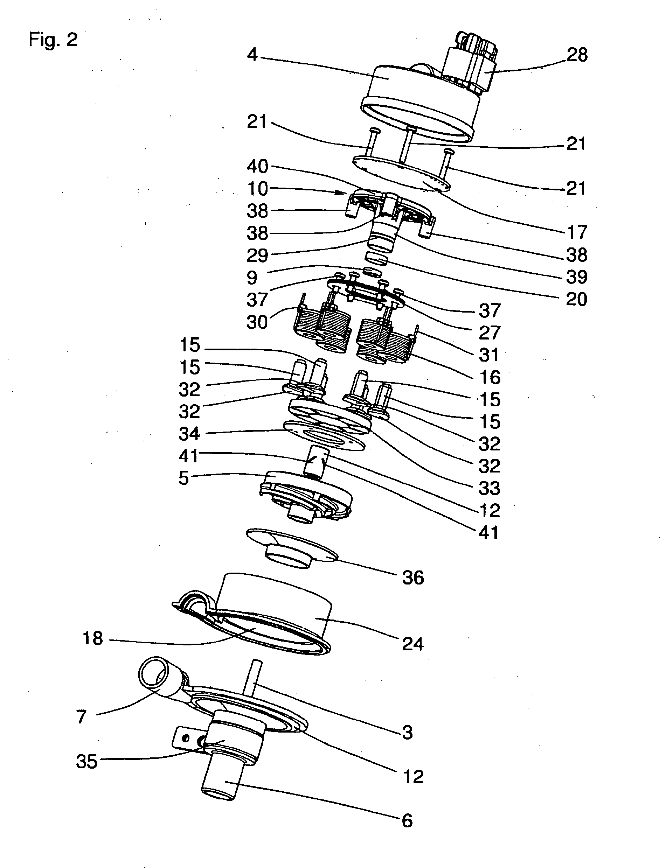

Fig. 2 zeigt von oben nach Unten, das Motorgehäuse 4, mit dem angeformten Steckergehäuse 28, die Stator-Befestigungsschrauben 21, die Leiterplatte 17, den Wärmeleitkörper 10, mit der Scheibe 40, den Abstandshülsen 38, dem Rohr 39 und der Nut 29, dem Lageraufnahmering 20, dem Axiallagerring 9, einem Stator-Rückschlussring 27, die mit Rückschluss-Befestigungsschrauben 37 befestigt sind, Isolierstoffkörpern 30, mit Anschlussstiften 31, wobei die Isolierstoffkörper 30 mit Statorwicklungen 16 bewickelt sind, die Pole 15, mit im Querschnitt größeren Polschuhen 32, einem Rotormagneten 33, einer Rotor-Rückschlussring 34, dem Festlager 12, mit Kerben 41 zur innigeren Verbindung mit dem Pumpenlaufrad 5, einer Deckscheibe 36, dem zweiten Pumpengehäuseteil 24 mit der Spaltplatte 18, der Achse 3, dem ersten Pumpengehäuse 2 (Pumpenkopf) einem Befestigungsring 35, dem Saugstutzen 6 und einem Druckstutzen 7. Der Übersichtlichkeit halber ist in Fig. 2 die Reihenfolge der Bauteile teilweise vertauscht.

Bei dem Pumpenmotor aus den Figuren 1 und 2 handelt es sich um einen elektronisch kommutierten Gleichstrommotor mit parallel zur Drehachse ausgerichteten Einzelpolen mit jeweils einer Zylinderspule. Der Motor weist einen axialen Luftspalt auf. Der Rückschlussring 27 des Stators besteht aus einem Blechstapel. Die Pole 15 sind pulvermetallisch hergestellt. Rückschlussring 27 und Pole 15 sind miteinander und mit dem Statorkörper verschraubt. Durch eine andere Schraubverbindung ist die Leiterplatte 17 mit dem Wärmeleitkörper 10 und dem zweiten Pumpengehäuseteil 24 verschraubt. Das Pumpenlaufrad 5 bildet den permanentmagnetischen Rotor des Gleichstrommotors, mit dem Rotormagneten 33, dem Rotorrückschlussring 34 und dem hohlzylindrischen Festlager 12. Der Rotormagnet 33, sowie der Rotorrückschlussring 34

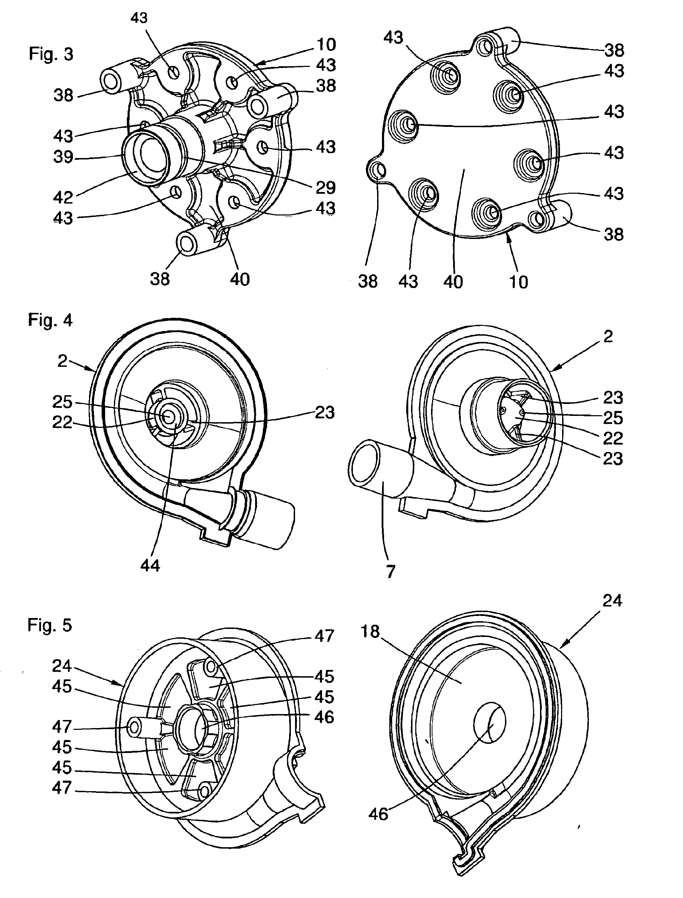

Fig. 3 zeigt räumliche Ansichten des Wärmeleitkörpers 10, mit der Scheibe 40, dem Rohr 39, den Abstandshülsen 38, der Nut 29, einem Aufnahmeraum 42 für den Lageraufnahmering 20 und Pol-Befestigungsausnehmungen 43.

Fig. 4 zeigt räumliche Ansichten des ersten Pumpengehäuseteils 2, mit dem Aufnahmedorn 22, den Speichen 23, dem Durchgang 25 und einem Aufnahmeraum für den ersten Axiallagerring 44.

Fig. 5 zeigt räumliche Ansichten des zweiten Pumpengehäuseteils 24, mit der Spaltplatte 18, die im Bereich der zu montierenden Pole Vertiefungen 45 aufweisen um einen möglichst geringen Luftspalt im magnetischen Kreis des Motors zu erhalten, einen zentralen Durchgang 46 für die Achse 3 und drei Gewindebuchsen 47 zur Befestigung des Stators mit Hilfe der Stator-Befestigungsschrauben.

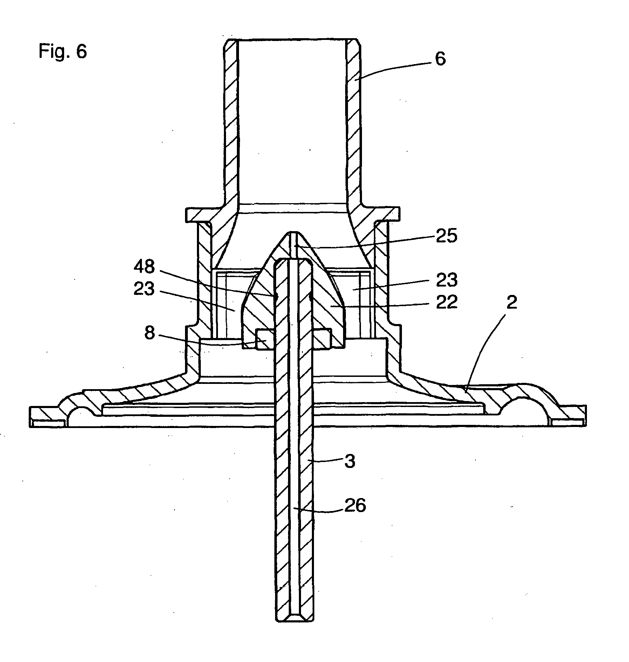

Fig. 6 zeigt eine Schnittansicht durch das erste Pumpengehäuseteil 2 mit der montierten feststehenden Achse 3, mit ihrem Strömungskanal 26, dem Durchgang 25, dem ersten Axliallagerring 8, den Speichen 23 und dem Saugstutzen 6. Die Achse weist eine Kerbe 48 auf, die eine innige Verbindung mit dem Aufnahmedorn sicherstellt.

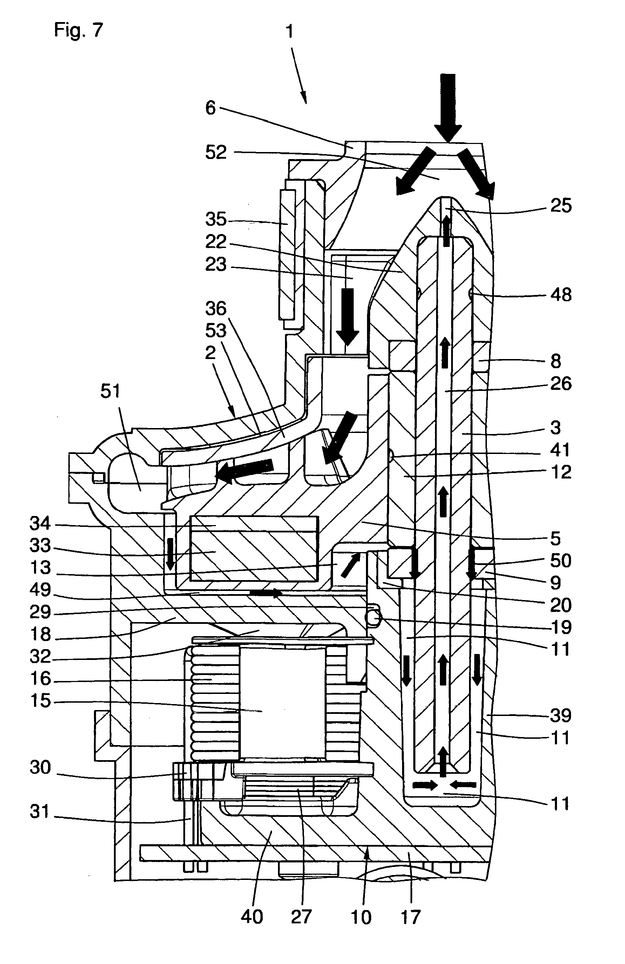

Fig. 7 zeigt eine vergrößerte Teilschnittansicht der erfindungsgemäßen Kreiselpumpe 1, diese ist so gestaltet, dass ein kontinuierlicher Kühl- und Entgasungsstrom von einem Druckbereich 51 her über den "Luftspalt" 49 und einem ringförmigen Spalt 50 zwischen dem zweiten Axiallagerring 9 und der Achse 3 in den Hohlraum 11 und von dort über den Strömungskanal 26 der hohlen Achse 3 und den Durchgang 25 des Aufnahmedorns 22 zurück in den Ansaugbereich 52 verläuft. Die Besonderheit hierbei ist die große Fläche über welche der Wärmeleitkörper 10, der aus dem gut wärmeleitenden Aluminium besteht, mit dem Fördermedium in Kontakt steht. Die Größe dieser Fläche wird bestimmt durch die Länge des Hohlraums 11, dessen Durchmesser, die Länge des Rohrs 39, das in den Pumpenraum 13 hineinragt und dessen Durchmesser. Durch die beschriebene Gestaltung wird das Fördermedium in eine Art mäanderförmigen Verlauf gezwungen und kann länger als bei bisher bekannten Lösungen Wärme aus dem Wärmeleitkörper 10 aufnehmen und abtransportieren. Trotz dieser großen Wärmeübergangsfläche ist die Baugröße gegenüber vergleichbaren Pumpen nicht vergrößert und es ist zudem nur eine kleiner ringförmiger Dichtbereich vorhanden, der mit einfachen Mitteln, wie hier mit der in die Nut 29 eingelegten Ringschnurdichtung 19, abdichtbar ist. In Fig. 7 ist deutlicher als in Fig. 1 ein Spalt 53 zwischen der Deckscheibe 36 des Pumpenlaufrads 5 und dem ersten Pumpengehäuseteil 2 zu erkennen. Dieser Spalt 53 muss möglichst klein sein, um einen großen Wirkungsgrad zu erreichen. Durch die beim Urformvorgang des ersten Pumpengehäuseteils 2 exakt ausgerichtete Achse 3 wird eine maximale Genauigkeit erreicht.

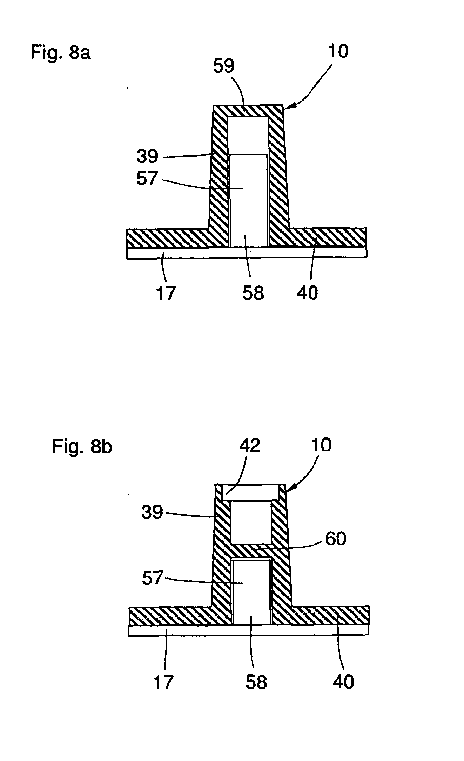

Fig. 8a zeigt eine zweite Ausführungsform des Wärmeleitkörpers 10, bei der die Scheibe 40 zentral mit einer Öffnung versehen ist und das Rohr 39 durch einen Boden 59 an ihrer dem Pumpenlaufrad zugewanden Seite geschlossen ist. Durch diese Ausgestaltung ergibt sich die Möglichkeit einen Baugroßen Kondensator 57, der auf der Leiterplatte 17 angeordnet ist, platzsparend unterzubringen.

Fig. 8b zeigt eine dritte Ausführungsform des Wärmeleitkörpers 10, bei dem das Rohr 39 beidseitig offen ist, aber in seinem mittleren Bereich eine Trennwand 60 vorgesehen ist, die den Trockenraum vom Nassraum trennt. Die dritte Ausführungsform kombiniert die beiden ersten Ausführungsformen miteinander. Zum einen ist ein Bauraum für den Kondensator 57 vorhanden, zum anderen kann ein Teil des Rohres 39 auch als Kühlkanal, gemäß der ersten Ausführungsform genutzt werden. Am Rohrende 39 befindet sich ein Aufnahmeraum 42 für ein Lager.

### Bezugszeichenliste

- 1: Kreiselpumpe
- 2: Pumpengehäuseteil (Pumpenkopf)
- 3: Achse
- 4: Pumpengehäuse
- 5: Pumpenlaufrad
- 6: Saugstutzen
- 7: Druckstutzen
- 8: erster Axiallagerring
- 9: zweiter Axiallagerring
- 10: Wärmeleitkörper
- 11: Hohlraum
- 12: Hohlzylindrisches Festlager
- 13: Pumpenraum
- 14: Motorgehäuse
- 15: Pol
- 16: Statorwicklung
- 17: Leiterplatte
- 18: Spaltplatte
- 19: Ringschnurdichtung
- 20: Lageraufnahmering
- 21: Stator-Befestigungsschrauben
- 22: Aufnahmedorn
- 23: Speichen
- 24: zweiter Pumpengehäuseteil
- 25: Durchgang im Aufnahmedorn
- 26: Strömungskanal
- 27: Stator-Rückschlussring
- 28: Steckergehäuse
- 29: Nut
- 30: Isolierstoffkörper
- 31: Anschlussstift
- 32: Polschuh
- 33: Rotormagnet
- 34: Rotor-Rückschlussring
- 35: Befestigungsring
- 36: Deckscheibe (zu Pumpenlaufrad 5)
- 37: Rückschluss-Befestigungsschrauben
- 38: Abstandshülsen
- 39: Rohr
- 40: Scheibe
- 41: Kerbe
- 42: Aufnahmeraum
- 43: Pol-Befestigungsausnehmungen
- 44: Aufnahmeraum für Axiallagerring
- 45: Vertiefungen für Pole
- 46: Durchgang für Achse
- 47: Gewindebuchse
- 48: Kerbe in Achse
- 49: Luftspalt
- 50: Ringspalt
- 51: Druckbereich
- 52: Ansaugbereich
- 53: Spalt
- 54: Trockenkammer
- 55: Stator
- 56: Axialmotor
- 57: Kondensator
- 58: Öffnung
- 59: Boden
- 60: Trennwand

## Patentansprüche

1. Kreiselpumpe (1), welche durch einen elektronisch kommutierten Gleichstrommotor (56) mit Axialspalt betreibbar ist, mit einem Trockenraum (54), in dem ein bewickelter Stator (55) aufgenommen ist und einem fluidfüllbaren Pumpenraum (13) in dem ein permanentmagnetisches Pumpenlaufrad (5) drehbar aufgenommen ist, wobei das Pumpenlaufrad (5) durch eine Spaltplatte (18) vom Stator (55) getrennt ist, der mit einem Rückschlussring (27), an welchen mehrere Pole (15) anschließen, und einer Leiterplatte (17) verbunden und in wärmeleitendem Kontakt ist und einen Wärmeleitkörper (10) aus einem gut wärmeleitenden Leichtmetall umfasst, wobei der Wärmeleitkörper (10) im Wesentlichen aus einer rechtwinklig zur Motorachse ausgerichteten Scheibe (40) oder Ringscheibe mit einem einstückig daran anschließenden offenen oder geschlossenen Rohr (39) besteht und die Leiterplatte auf der dem Pumpenlaufrad (5) abgewandten Seite mit dem Wärmeleitkörper verbunden ist, **dadurch gekennzeichnet, dass** das Rohr (39) zur Motorachse koaxial ist und sich in Richtung auf das Pumpenlaufrad erstreckt, dass eine hohle Achse (3) in einem mit einem Saugstutzen (6) einstückigen Aufnahmedorn (22) befestigt ist und dass das Rohr (39) das Ende der Achse (3) berührungsfrei und unter Belassung eines teilweise ringspaltartigen Hohlraums (11) aufnimmt, wobei der Ringspalt mit dem Fördermedium gefüllt ist.

2. Kreiselpumpe nach Anspruch 1, **dadurch gekennzeichnet, dass** der Wärmeleitkörper (10) in unmittelbarem Kontakt mit einer durch das Pumpenlaufrad (5) bewirkbaren Strömung eines Fördermediums ist und den Trockenraum (54) von dem Pumpenraum (13) trennt.

3. Kreiselpumpe nach Anspruch 1 oder 2, **dadurch gekennzeichnet, dass** die Leiterplatte (17) großflächig mit dem Wärmeleitkörper (10) in wärmeleitenden Kontakt ist und über Stator-Befestigungsschrauben (21) mit dem Wärmeleitkörper und einem Pumpengehäuseteil (24) verbunden ist.

4. Kreiselpumpe nach Anspruch 1, 2 oder 3, **dadurch gekennzeichnet, dass** Leiterbahnen der Leiterplatte (17) mit dem Wärmeleitkörper (10) in wärmeleitendem Kontakt sind.

5. Kreiselpumpe nach Anspruch 2, **dadurch gekennzeichnet, dass** für die Abdichtung zwischen dem Trockenraum (54) und dem Pumpenraum (13) eine einzige Ringschnurdichtung (19) vorgesehen ist.

6. Kreiselpumpe nach Anspruch 5, **dadurch gekennzeichnet, dass** die Ringschnurdichtung (19) zwischen dem Wärmeleitkörper (10) und der Spaltplatte (18) angeordnet ist.

7. Kreiselpumpe nach Anspruch 1, 2, 3 oder 4, **dadurch gekennzeichnet, dass** der Rückschlussring (27) aus einem Stapel von Blechringen besteht und mit dem Wärmeleitkörper (10) verschraubt ist.

8. Kreiselpumpe nach Anspruch 1, **dadurch gekennzeichnet, dass** das Rohr (39) an seinem Umfang eine Nut (29) aufweist in welche die Ringschnurdichtung (19) eingelegt ist.

9. Kreiselpumpe nach Anspruch 1, 2, 3, 4, 6 oder 7, **dadurch gekennzeichnet, dass** der Wärmeleitkörper (10) mit Abstandshülsen (38) einstückig ist, die mit Gewindebuchsen (47) eines Pumpengehäuseteils (24) übereinstimmen, wobei die Abstandshülsen (38) am äußeren Rand der Scheibe (40) angeordnet sind.

10. Kreiselpumpe nach Anspruch 9, **dadurch gekennzeichnet, dass** die Leiterplatte (17) mit mehreren Stator-Befestigungsschrauben (21), die durch jeweils eine Abstandshülse (38) hindurch verlaufen mit jeweils einer Gewindebuchse (47) verschraubt ist.

11. Kreiselpumpe nach Anspruch 1, **dadurch gekennzeichnet, dass** der Wärmeleitkörper (10), der Rückschlussring (27) und die Pole (15) durch Rückschluss-Befestigungsschrauben (37) miteinander verbunden sind, wobei die Pole (15) Gewindesacklöcher aufweisen, die zu der dem Pumpenraum (13) abgewandten Seite der Pole (15) geöffnet sind.

12. Kreiselpumpe nach Anspruch 1, **dadurch gekennzeichnet, dass** der Wärmeleitkörper (10), der Rückschlussring (27) und das Gehäuseteil (24) miteinander verschraubt sind.

13. Kreiselpumpe nach Anspruch 11 **dadurch gekennzeichnet, dass** jeder Pol (15) einen mit einer Statorwicklung (16) bewickelten Isolierstoffkörper (30) trägt, der zwischen einem Polschuh (32) und dem Rückschlussring (27) angeordnet ist.

14. Kreiselpumpe nach Anspruch 1, **dadurch gekennzeichnet, dass** der frei in den Hohlraum (11) ragende Abschnitt der Achse (3) einen 20 - 60 %-igen Anteil an der Gesamtlänge der Achse (3) einnimmt.

15. Kreiselpumpe nach Anspruch 10, **dadurch gekennzeichnet, dass** das Rohr (39) an seinem dem Pumpenraum (13) zugewandten Ende einen Axiallagerring (9) trägt, durch welchen sich die Achse (3) berührungsfrei hindurch erstreckt.

16. Kreiselpumpe nach Anspruch 15, **dadurch gekennzeichnet, dass** zwischen dem Axiallagerring (8) und dem Wärmeleitkörper (10) ein Lageraufnahmering (20) angeordnet ist.

17. Kreiselpumpe nach zumindest einem der vorangehenden Ansprüche, **dadurch gekennzeichnet, dass** der Wärmeleitkörper (10) in den Pumpenraum vorragt.

18. Kreiselpumpe nach zumindest einem der vorangehenden Ansprüche, **dadurch gekennzeichnet, dass** ein Teil des Fördermediums über einen geschlossenen Pfad vom Druckbereich der Pumpe über den Luftspalt zwischen dem Pumpenlaufrad (5) und einer Spaltplatte (18) des zweiten Pumpengehäuseteils (24), einem Zwischenraum zwischen dem Axiallagerring (9) und der Achse (3), dem Hohlraum (11) einem Strömungskanal (26) der Achse (3) und einem Durchgang (25) eines Aufnahmedorns (22) des Pumpenkopfs zurück in den Hauptfluidstromkreis führbar ist.

19. Kreiselpumpe nach Anspruch 1, **dadurch gekennzeichnet, dass** die Scheibe (40) im Bereich innerhalb des anschließenden Rohres (39) eine Aussparung aufweist, durch welche ein Kondensator (57), der auf der Leiterplatte (17) angeordnet und mit ihr elektrisch und mechanisch verbunden ist, in das Rohr (39) hineinragt.

20. Kreiselpumpe nach Anspruch 1 oder 19, **dadurch gekennzeichnet, dass** das dem Pumpenlaufrad zugewandte Ende des Rohres (39) geschlossen und hermetisch dicht ist.

21. Kreiselpumpe nach Anspruch 1 oder 19, **dadurch gekennzeichnet, dass** ein Abschnitt des Rohres (39) als Aufnahmeraum für einen Kondensator (57) dient und ein zweiter, durch eine Trennwand vom ersten getrennter, Abschnitt als flüssigkeitsdurchströmbarer Kühlkanal dient.

## Claims

1. A centrifugal pump (1) operable by an electronically commutated direct-current motor (56) with an axial gap, having a dry chamber (54) in which a wound stator (55) is received and a fluid-fillable pump chamber (13) in which a permanent-magnet pump impeller (5) is rotatably received, wherein the pump impeller (5) is separated by a gap plate (18) from the stator (55) which is connected to and in heat-conducting contact with a return ring (27), to which a plurality of poles (15) are connected, and a printed circuit board (17) and comprises a heat-conducting body (10) of a light metal which conducts heat well, wherein the heat-conducting body (10) is composed substantially of a disc (40) or annular disc, directed at right angles to the motor axis, with an open or closed pipe (30) integrally connected thereto and the printed circuit board side remote from the pump impeller (5) is connected to the heat-conducting body, **characterised in that** the pipe (39) is coaxial with the motor axis and extends in the direction of the pump impeller, **in that** a hollow arbor (3) is secured in a receiving lug (22) integral with a suction stub (6) and **in that** the pipe (39) receives the end of the arbor (3) in a contact-free manner with a partially annular-gap-like hollow space (11) being kept free, wherein the annular gap is filled with the medium to be conveyed.

2. A centrifugal pump according to claim 1, **characterised in that** the heat-conducting body (10) is in direct contact with a flow, of a medium to be conveyed, able to be brought about by the pump impeller (5) and separates the dry chamber (54) from the pump chamber (13).

3. A centrifugal pump according to claim 1 or 2, **characterised in that** the printed circuit board (17) is in heat-conducting contact with the heat-conducting body (10) over a large area and is connected to the heat-conducting body and a pump casing part (24) via stator securing screws (21).

4. A centrifugal pump according to claim 1, 2 or 3, **characterised in that** conducting tracks of the printed circuit board (17) are in heat-conducting contact with the heat-conducting body (10).

5. A centrifugal pump according to claim 2, **characterised in that** for sealing between the dry chamber (54) and the pump chamber (13) there is provided a single annular cord seal (19).

6. A centrifugal pump according to claim 5, **characterised in that** the annular cord seal (19) is arranged between the heat-conducting body (10) and the gap plate (18).

7. A centrifugal pump according to claim 1, 2, 3 or 4, **characterised in that** the return ring (27) is composed of a stack of sheet-metal rings and is screwed to the heat-conducting body (10).

8. A centrifugal pump according to claim 1, **characterised in that** the pipe (39) has at its circumference a groove (29) into which the annular cord seal (19) is placed.

9. A centrifugal pump according to claim 1, 2, 3, 4, 6 or 7, **characterised in that** the heat-conducting body (10) is in one piece with spacer tubes (38) which match screw sockets (47) of a pump casing part (24), wherein the spacer tubes (38) are arranged at the outer edge of the disc (40).

10. A centrifugal pump according to claim 9, **characterised in that** the printed circuit board (17) is, with a plurality of stator securing screws (21) which each run through a respective spacer tube (38), screwed to a respective screw socket (47).

11. A centrifugal pump according to claim 1, **characterised in that** the heat-conducting body (10), the return ring (27) and the poles (15) are connected to one another by return securing screws (37), wherein the poles (15) have threaded blind bores open to the side, remote from the pump chamber (13), of the poles (15).

12. A centrifugal pump according to claim 1, **characterised in that** the heat-conducting body (10), the return ring (27) and the housing part (24) are screwed to one another.

13. A centrifugal pump according to claim 11, **characterised in that** each pole (15) bears an insulating-material body (30) wound with a stator winding (16), which insulating-material body (30) is arranged between a pole shoe (32) and the return ring (27).

14. A centrifugal pump according to claim 1, **characterised in that** the portion, of the arbor (3), projecting freely into the hollow space (11) occupies a 20 - 60% proportion of the total length of the arbor (3).

15. A centrifugal pump according to claim 10, **characterised in that** the pipe (39) bears a thrust-bearing ring (9) at its end facing the pump chamber (13), through which thrust-bearing ring (9) there extends the arbor (3) in a contact-free manner.

16. A centrifugal pump according to claim 15, **characterised in that** a bearing receiving ring (20) is arranged between the thrust-bearing ring (8) and the heat-conducting body (10).

17. A centrifugal pump according to at least one of the preceding claims, **characterised in that** the heat-conducting body (10) projects into the pump chamber.

18. A centrifugal pump according to at least one of the preceding claims, **characterised in that** part of the medium to be conveyed can be guided, via a closed pathway, back into the main fluid circuit from the pressure region of the pump via the air gap between the pump impeller (5) and a gap plate (18) of the second pump casing part (24), from an interspace between the thrust-bearing ring (9) and the arbor (3), from the hollow space (11), from a flow channel (26) of the arbor (3) and from a passage (25) of a receiving lug (22) of the pump head.

19. A centrifugal pump according to claim 1, **characterised in that** the disc (40) has, in the region within the adjoining pipe (39), a cut-out through which a capacitor (57), arranged on the printed circuit board (17) and electrically and mechanically connected thereto, projects into the pipe (39).

20. A centrifugal pump according to claim 1 or 19, **characterised in that** the end, facing the pump impeller, of the pipe (39) is closed and hermetically sealed.

21. A centrifugal pump according to claim 1 or 19, **characterised in that** a portion of the pipe (39) serves as a receiving space for a capacitor (57) and a second portion, separated from the first by a separating wall, serves as a cooling channel through which fluid can flow.

## Revendications

1. Pompe centrifuge (1), qui peut fonctionner à l'aide d'un moteur à courant continu (56) à commutation électronique et entrefer axial, comprenant un compartiment sec (54) dans lequel est logé un stator (55) à enroulements, et un compartiment de pompe (13) pouvant être rempli de fluide et dans lequel est logée de manière rotative une roue mobile de pompe (5) à aimantation permanente, pompe
dans laquelle la roue mobile de pompe (5) est séparée par une plaque de cloisonnement (18) du stator (55), qui est relié et en contact de transmission de chaleur avec un anneau de retour magnétique (27) auquel se raccordent plusieurs pôles (15), et avec une plaque de circuit imprimé (17), et qui comprend un corps de transmission de chaleur (10) en un métal léger assurant une bonne transmission de la chaleur, et
dans laquelle le corps de transmission de chaleur (10) est constitué essentiellement par un disque (40) ou disque annulaire, orienté perpendiculairement à l'axe de moteur, et auquel se raccorde, d'un seul tenant, un tube (39) ouvert ou fermé, et la plaque de circuit imprimé est reliée au corps de transmission de chaleur sur le côté opposé à celui dirigé vers la roue mobile de pompe (5),
**caractérisée en ce que** le tube (39) est coaxial à l'axe de moteur et s'étend en direction de la roue mobile de pompe, **en ce qu'**un axe creux (3) est fixé dans un appendice de réception (22) d'un seul tenant avec un embout d'aspiration (6), et **en ce que** le tube (39) reçoit l'extrémité de l'axe (3) sans être en contact avec elle et en laissant libre une cavité (11) partiellement en forme d'interstice annulaire, l'interstice annulaire étant rempli du fluide à refouler.

2. Pompe centrifuge selon la revendication 1, **caractérisée en ce que** le corps de transmission de chaleur (10) est en contact direct avec un écoulement du fluide à refouler pouvant être produit par la roue mobile de pompe (5), et sépare le compartiment sec (54) du compartiment de pompe (13).

3. Pompe centrifuge selon la revendication 1 ou la revendication 2, **caractérisée en ce que** la plaque de circuit imprimé (17) est en contact de transmission de chaleur, selon une grande surface, avec le corps de transmission de chaleur (10), et est assemblée au corps de transmission de chaleur et à une pièce de carter de pompe (24) par l'intermédiaire de vis de fixation de stator (21).

4. Pompe centrifuge selon la revendication 1, 2 ou 3, **caractérisée en ce que** des pistes conductrices de la plaque de circuit imprimé (17) sont en contact de transmission de chaleur avec le corps de transmission de chaleur (10).

5. Pompe centrifuge selon la revendication 2, **caractérisée en ce que** pour l'étanchéité entre le compartiment sec (54) et le compartiment de pompe (13), il est prévu un seul joint d'étanchéité à cordon annulaire (19).

6. Pompe centrifuge selon la revendication 5, **caractérisée en ce que** le joint d'étanchéité à cordon annulaire (19) est agencé entre le corps de transmission de chaleur (10) et la plaque de cloisonnement (18).

7. Pompe centrifuge selon la revendication 1, 2, 3 ou 4, **caractérisée en ce que** l'anneau de retour magnétique (27) est constitué d'un empilement d'anneaux de tôle, et est assemblé par vissage au corps de transmission de chaleur (10).

8. Pompe centrifuge selon la revendication 1, **caractérisée en ce que** le tube (39) présente sur sa périphérie, une rainure (29) dans laquelle est placé le joint d'étanchéité à cordon annulaire (19).

9. Pompe centrifuge selon la revendication 1, 2, 3, 4, 6 ou 7, **caractérisée en ce que** le corps de transmission de chaleur (10) est réalisé d'un seul tenant avec des douilles-entretoises (38), qui coïncident avec des douilles taraudées (47) d'une pièce de carter de pompe (24), les douilles-entretoises (38) étant agencées au niveau du bord extérieur du disque (40).

10. Pompe centrifuge selon la revendication 9, **caractérisée en ce que** la plaque de circuit imprimé (17) est vissée, par plusieurs vis de fixation de stator (21), qui s'étendent chacune à travers une douille-entretoise (38), sur une douille taraudée (47) respectivement correspondante pour chacune des vis.

11. Pompe centrifuge selon la revendication 1, **caractérisée en ce que** le corps de transmission de chaleur (10), l'anneau de retour magnétique (27) et les pôles (15) sont assemblés mutuellement par des vis de fixation de retour magnétique (37), les pôles (15) présentant des trous borgnes taraudés, qui sont ouverts du côté des pôles (15) opposé à celui dirigé vers le compartiment de pompe (13).

12. Pompe centrifuge selon la revendication 1, **caractérisée en ce que** le corps de transmission de chaleur (10), l'anneau de retour magnétique (27) et la pièce de carter (24) sont assemblés mutuellement par vissage.

13. Pompe centrifuge selon la revendication 11, **caractérisée en ce que** chaque pôle (15) porte un corps de matériau isolant (30) sur lequel est enroulé un enroulement de stator (16), et qui est agencé entre une corne polaire (32) et l'anneau de retour magnétique (27).

14. Pompe centrifuge selon la revendication 1, **caractérisée en ce que** le tronçon de l'axe (3) s'engageant librement dans la cavité (11), occupe une part d'environ 20-60% de la longueur totale de l'axe (3).

15. Pompe centrifuge selon la revendication 10, **caractérisée en ce que** le tube (39) porte à son extrémité dirigée vers le compartiment de pompe (13), une bague de palier axial (9), à travers laquelle s'étend, sans contact, l'axe (3).

16. Pompe centrifuge selon la revendication 15, **caractérisée en ce qu'**entre la bague de palier axial (8) et le corps de transmission de chaleur (10), est agencée un anneau de logement de palier (20).

17. Pompe centrifuge selon l'une au moins des revendications précédentes, **caractérisée en ce que** le corps de transmission de chaleur (10) s'avance dans le compartiment de pompe.

18. Pompe centrifuge selon l'une au moins des revendications précédentes, **caractérisée en ce qu'**une partie du fluide à refouler peut être ramené, par l'intermédiaire d'un parcours fermé, de la zone de pression de la pompe, dans le circuit d'écoulement de fluide principal, par l'intermédiaire de l'entrefer entre la roue mobile de pompe (5) et une plaque de cloisonnement (18) de la deuxième pièce de carter de pompe (24), un espace intermédiaire entre la bague de palier axial (9) et l'axe (3), la cavité (11), un canal d'écoulement (26) de l'axe (3) et un passage (25) d'un appendice de réception (22).

19. Pompe centrifuge selon la revendication 1, **caractérisée en ce que** le disque (40) présente, dans la zone à l'intérieur du tube (39) s'y raccordant, un évidement par lequel un condensateur (57), qui est agencé sur la plaque de circuit imprimé (17) en étant relié électriquement et mécaniquement à celle-ci, s'engage dans le tube (39).

20. Pompe centrifuge selon la revendication 1 ou la revendication 19, **caractérisée en ce que** l'extrémité du tube (39), qui est dirigée vers la roue mobile de pompe, est fermée et hermétiquement étanche.

21. Pompe centrifuge selon la revendication 1 ou la revendication 19, **caractérisée en ce qu'**un tronçon du tube (39) sert de logement de réception pour un condensateur (57), et un deuxième tronçon, séparé du premier par une paroi de séparation, sert de canal de refroidissement dans lequel peut s'écouler le liquide ou fluide.
